# EUROPÄISCHE PATENTSCHRIFT

(11) **EP 1 783 633 B1**
(45) Veröffentlichungstag und Bekanntmachung des Hinweises auf die Patenterteilung: **29.08.2012**
(21) Anmeldenummer: 05109402.7
(22) Anmeldetag: 10.10.2005
(51) Int. Cl.: G06F 17/30

(54) **Suchmaschine für eine ortsbezogene Suche**
Search engine for a location related search
Moteur de recherche pour une recherche relative à une position

(43) Veröffentlichungstag der Anmeldung: 09.05.2007
(73) Patentinhaber: SEARCHTEQ GmbH, 60329 Frankfurt am Main (DE)
(72) Erfinder: Hantke, Reimar, D-82211 Herrsching (DE); Lohmeier, Florian, D-81925 München (DE)
(74) Vertreter: Emmerling, Friedrich

(56) Entgegenhaltungen:
- EP-A- 1 039 265
- EP-A- 1 072 987
- WO-A-01/25959
- WO-A-01/63479
- WO-A-01/65410
- WO-A-03/102738
- WO-A-2004/030338
- US-A- 5 893 093
- US-A- 5 930 474
- US-A1- 2004 267 723
- US-A1- 2005 182 770
- US-B1- 6 691 105
- KNUTH ET AL: "On the translation of languages from left to right", INFORMATION AND CONTROL, ACADEMIC PRESS, NEW YORK, NY, US, vol. 8, no. 6, 1 December 1965 (1965-12-01), pages 607-639, XP024888962, ISSN: 0019-9958, DOI: DOI:10.1016/S0019-9958(65)90426-2 [retrieved on 1965-12-01]
- "RESOLVING AMBIGUOUS PARSING RULES", IBM TECHNICAL DISCLOSURE BULLETIN, INTERNATIONAL BUSINESS MACHINES CORP. (THORNWOOD), US, vol. 37, no. 11, 1 November 1994 (1994-11-01), pages 211-213, XP000487215, ISSN: 0018-8689

## Beschreibung

### GEBIET DER ERFINDUNG

Die vorliegende Erfindung betrifft eine Suchmaschine für eine ortsbezogene Suche.

### HINTERGRUND DER ERFINDUNG

Suchmaschinen sind spezielle Rechner bzw. programmierte Rechenanlagen für die Suche nach Webseiten, die bestimmte von einem Benutzer eingegebene Suchkriterien erfüllen. Um ihre Aufgabe zu erfüllen, lädt eine Suchmaschine die Seiten des Internet auf den Rechner der Suchmaschine, indiziert die durchsuchten Seiten und stellt ferner eine Benutzerschnittstelle und einen Abfragemechanismus zur Verfügung, um die indizierten Seiten hinsichtlich vom Benutzer eingegebener Suchkriterien zu filtern und dem Benutzer die dann gefundenen Seiten, sogenannte Treffer oder Hits anzuzeigen.

Für das Herunterladen enthält eine Suchmaschine typischerweise einen sogenannten Crawler, der automatisch Internetadressen kontaktiert und die Inhalte der entsprechenden Websites zur weiteren Verarbeitung (Indizierung) herunterlädt.

Im Gegensatz zu den schon seit langem bekannten Datenbanken sind die Inhalte von Websites allerdings in der Regel unstrukturierte Informationen, der Bedeutungsinhalt der einzelnen Begriffe (Terme) einer Website ist nur schwer identifizierbar. Dies schränkt die Möglichkeiten der Indizierung und damit die Suchmöglichkeiten stark ein. De facto ist eine von einer Suchmaschine vorgenommene Webseiten-Indizierung daher immer eine Volltext-Indizierung, d.h. aus sämtlichen Begriffen, die auf der Website vorkommen (ausgenommen vordefinierter bedeutungsloser Stop-Wörter) wird ein Volltext-Index gebildet, auf den dann die Suchanfrage "gematcht" wird.

Bei der herkömmlichen Suchmaschinentechnologie gibt dabei ein Benutzer in ein Eingabeinterface Suchbegriffe ein, auf deren Basis dann eine Suchanfrage (Query) an einen Datenbestand der Suchmaschine abgeschickt wird, ein Anwenden der Suchbegriffe auf den Datenbestand bzw. den Index ergibt dann gegebenenfalls "Matches" oder "Treffer" und die entsprechenden Seiten bzw. Links werden für den Benutzer angezeigt.

Ein Problem bei herkömmlichen Suchmaschinen besteht darin, dass es schwierig ist, die ermittelten Treffer auf ein bestimmtes geographisches Suchkriterium einzuschränken. Zwar kann der Benutzer als Suchbegriff einen Ort, z. B. "Berlin" eingeben, dies bedeutet jedoch nicht, dass nur Seiten gefunden werden, die den gewünschten geographischen Bezug enthalten. Vielmehr werden aufgrund der Volltextindizierung, die ja nicht nach Bedeutungsinhalten unterscheidet, auch solche Seiten gefunden, in denen das Wort "Berlin" nicht als geographischer Herkunftsort des Webseitenangebots sondern in einer anderen Bedeutung auftaucht. So kann beispielsweise bei der Eingabe einer Suche mit den Suchbegriffen "Autohaus" und "Berlin" auch eine Seite als Treffer auftauchen, in der jemand von seinem Ausflug nach Berlin berichtet, wobei während des Ausflugs das Auto Schaden nahm und er ein Autohaus aufsuchen musste. Solche Treffer sind jedoch bei einer ortsbezogenen Suche, die als geographisches Herkunftskriterium "Berlin" enthält, unerwünscht.

Die internationale Patentanmeldung WO 01/63479 A1 bezieht sich auf eine räumliche Codierung und Darstellung von Information. In diesem Zusammenhang beschreibt die Patentanmeldung ein Computersystem, das ein Speichersystem umfasst, das Informationen in Form von Dokumenten zusammen mit räumlichen Informationen über diese Dokumente enthält. Dieses Computersystem umfasst außerdem Einrichtungen für die Datensammlung, die Datenanalyse, Datensuche, Datendarstellung sowie Portaldienste. Das Computersystem umfasst außerdem eine Kartenschnittstelle, über die Benutzer

das Speichersystem abfragen und eine Darstellung der Abfrageergebnisse in einer Karte dargestellt ansehen können.

Die US Patentanmeldung US 2004/0267723 A1 befass sich mit der Wiedergabe von Anzeigen mit Dokumenten mit einem oder mehreren Themen durch Verwendung von Themeninteresseinformationen. Die Patentanmeldung beschreibt dabei, dass Mehrdeutigkeiten in Bezug auf das Hauptinteresse eines Nutzers vermieden werden können, so dass nützliche, auf das Hauptinteresse des Nutzers gerichtete Werbung angezeigt werden kann. Solche Mehrdeutigkeiten können dadurch gelöst werden, dass das Nutzerverhalten überwacht, das Hauptinteresse des Nutzers auf Basis des überwachten Verhaltens bestimmt und die Werbung, die auf das so bestimmte Hauptinteresse des Nutzers gerichtet ist, bereitgestellt wird.

Die Europäische Patentanmeldung EP 1039265 A1 zeigt ein Geoinformationssystem, das eine Datenbank mit Orten verwaltet und eine Anwendung bereitstellt, die auf diese Datenbank zugreift, um einem Benutzer ortsbezogene Daten zu präsentieren. Anwender können auf einen Server zugreifen, auf dem die geographische Informationssystemdatenbank (GIS Datenbank) liegt. Diese Datenbank stellt ebenfalls ein Feedbacksystem bereit, durch das ein Benutzer der GIS Datenbank Information bestätigen kann, wenn er in der realen Welt einen Ort aufgesucht hat.

Es ist daher eine Aufgabe der vorliegenden Erfindung, eine Suchmaschine bereitzustellen, die diejenigen Internetseiten als Treffer liefert, für die ein gewünschtes geographisches Herkunftskriterium erfüllt ist.

### ZUSAMMENFASSUNG DER ERFINDUNG

Gemäß einem Ausführungsbeispiel der Erfindung umfasst die Erfindung eine Suchmaschine zum Durchführen einer Suche nach Internetseiten, für die ein vom Benutzer als Suchbegriff eingegebenes geographisches Herkunftskriterium erfüllt ist, wobei die Suchmaschine aufweist:
eine Einrichtung zum Durchsuchen einer Mehrzahl von Internetseiten;
eine Einrichtung zum Extrahieren von geographischen Daten aus den durchsuchten Seiten, wobei die extrahierten Daten jeweils den geographischen Bezug bzw. die geographische Zuordnung der Seite bzw. des Seitenanbieters bezeichnen;
eine Einrichtung zum Bilden eines Datenbestandes, bei dem einer Vielzahl von durchsuchten Internetseiten jeweils aus diesen Internetseiten extrahierte geographische Daten zugeordnet sind;
eine Eingabeschnittstelle zur Eingabe einer Suchanfrage durch den Benutzer, wobei die Eingabeschnittstelle dem Benutzer die Eingabe eines geographischen Herkunftskriteriums zusätzlich zu weiteren Suchbegriffen ermöglicht;
Durchsuchen des Datenbestands und Ausgabe derjenigen Internetseiten, für die das geographische Herkunftskriterium und die weiteren Suchbegriffe erfüllt sind durch Abgleich mit den Inhalten der Internetseiten und den diesen jeweils zugeordneten geographischen Daten

Die Extraktion von geographischen Herkunftsinformationen sowie deren Zuordnung zu einzelnen Seiten ermöglicht die Schaffung eines Datenbestandes aus Internetseiten, der gezielt nach geographischen Herkunftskriterien durchsucht werden kann.

Die Einrichtung zur Extraktion der geographischen Herkunftsinformation gemäss vorgenanntem Ausführungsbeispiel weist weiterhin auf:
eine Einrichtung zum Anwenden eines Regelwerks auf den Inhalt einer Internetseite, um diejenigen Informationen zu extrahieren, die entsprechend den Kriterien des Regelwerks eine Adresse oder eine geographische Herkunft spezifizieren könnten;
eine Einrichtung zur Verifizierung der möglichen geographischen Herkunftsinformationen durch Abgleich mit einem vorhandenen Datenbestand aus existierenden Adressen und/oder Adressteilen, wobei die entsprechend den kriterien des Regelwerks spezifizierten Adressdaten für die der Abgleich mit dem vorhandenen Datenbestand aus existierenden Adressen keine Übereinstimmung liefert, aus dem zu durchsuchenden Datenbestand entfernt werden.

Die Anwendung eines Regelwerks auf Inhalte einzelner Internetseiten ermöglicht die Überprüfung dahingehend, ob einzelne Bestandteile vorbestimmte Bedingungen erfüllen und damit als Kandidaten für geographische Herkunftsinformationen - z. B. Adressen - in Frage kommen bzw. liefert entsprechenden Kandidaten. Die Überprüfung bzw. der Abgleich derartiger Kandidaten mit einem Bestand existierender Adressdaten oder Adressteilen ermöglicht eine weitere Erhöhung der Wahrscheinlichkeit, dass es sich bei den gemäss dem Regelwerk extrahierten Kandidaten tatsächlich um Adressdaten handelt. Gegebenenfalls können Kandidaten, die bei diesem Test "durchfallen" verworfen werden, so dass tatsächlich nur gültige Adressen bzw. geographische Herkunftsdaten übrig bleiben.

Gemäss einem Ausführungsbeispiel umfasst die Suchmaschine ferner:
eine Einrichtung zur Beurteilung, ob es sich bei der durchsuchten Seite um die Seite eines gewerblichen Anbieters handelt.

Die Überprüfung dahingehend, ob es sich um die Seite eines gewerblichen Anbieter handelt, ermöglicht es, dass nur gewerbliche Seiten in den Datenbestand aufgenommen und somit als Resultate ausgegeben werden.

Gemäss einem Ausführungsbeispiel umfasst die Suchmaschine ferner:
eine Einrichtung zur Geokodierung der durchsuchten Internetseite, indem basierend auf den extrahierten geographischen Herkunftsinformationen durch Abgleich mit einem Datenbestand aus existierenden Geoinformationsdaten zu einer extrahierten Adressinformation bzw. geographischen Information eine Geokodierung mittels eines geographischen Koordinatensystems ermittelt und der Internetseite zugewiesen wird.

Die Zuordnung von Geokodierungsdaten zu den Webseiten basierend auf den extrahierten geographischen Informationen ermöglicht es, die Suche exakt auf mittels geographischer Koordinaten definierte Suchbedingungen einzuschränken und entsprechende Treffer auszugeben. Dies beinhaltet neben exakten Ortsinformationen insbesondere auch die Umkreissuche oder auch die Verwendung einer Eingabeschnittstelle in Form einer Landkarte, auf der dann das Suchgebiet definiert wird..

Gemäss einem Ausführungsbeispiel umfasst die Suchmaschine ferner:
eine Einrichtung zum Durchsuchen der einzelnen Internetseiten nach einer Mehrzahl von Begriffen, die geeignet sind, die Internetseiten hinsichtlich des angebotenen Inhalts zu klassifizieren, wobei im Falle eines Treffers - gegebenenfalls unter Anwendung weiterer Bedingungen - der Internetseite eine entsprechende Klassifikation zugewiesen wird.

Das Durchsuchen nach Klassifikationsbegriffen aus einem vordefinierten Bestand solcher Begriffe ermöglicht die Zuordnung solcher Klassifikationsbegriffe zu den einzelnen Webseiten. Dies kann dann beispielsweise zu einer weiteren Spezifizierung der Suchanfrage verwendet werden, etwa um nur diejenigen Webseiten als Treffer zu liefern, denen ein vom Benutzer eingegebener Klassifikationsbegriff zugeordnet wurde.

Gemäss einem Ausführungsbeispiel umfasst die Suchmaschine ferner:
eine Einrichtung zum Indexieren der durchsuchten Seiten, denen geographische Herkunftsinformationen und gegebenenfalls weitere Klassifikationsinformationen zugewiesen wurden;
eine Einrichtung zum Matchen der Suchbegriffe mit dem Inhalt des gebildeten Index;
eine Ausgabe der erhaltenen Treffer, wobei die einer Internetseite zugewiesenen geographischen Herkunftsinformationen durch Abgleich mit den als Suchbegriff eingegebenen geographischen Herkunftsinfomationen als Filterkriterium für die Ausgabe der Trefferliste dienen.

Die Indizierung des Datenbestandes aus Webseiten bzw. Internetadressen, denen geographische Herkunftsinformationen und eventuell noch weitere Informationen wie Geokoordinaten und/oder Klassifikationsinformationen zugewiesen wurden, ermöglicht den Abgleich mit einer Suchanfrage, die unter anderem ein geographisches Suchkriterium enthält, sowie die Ausgabe der entsprechenden Treffer an den Benutzer.

Gemäss einem Ausführungsbeispiel umfasst die Suchmaschine ferner:
eine Einrichtung zum Normalisieren der extrahierten geographischen Informationen, um diese in ein standardisiertes Format zu bringen, das dann als "Businesscard" die Adressinformationen und gegebenenfalls weiteren Kontaktinformationen zusammen mit der Internetadresse an den Benutzer ausgibt.

Die Normalisierung kann dadurch geschehen, dass Informationen, die in verschiedener Form vorliegen können aber den gleichen Bedeutungsinhalt haben, durch einen Standardbegriff bzw. ein Standardformat ersetzt bzw. in dieses umgewandelt werden, so dass dem Benutzer beispielsweise eine Adresse oder eine Telefonnummer immer im selben Format ausgegeben wird. Durch Ausgabe zusammen mit der URL des Treffers kann der Benutzer gleich für ihn besonders wichtige Informationen wie Adressinformationen oder eine Telefonnummer erkennen und es ist dann unter Umständen gar nicht nötig, dass er auf den Link des Treffers clickt und sich die entsprechende Seite ansieht.

Gemäss einem Ausführungsbeispiel umfasst die Suchmaschine ferner:
einen Datenbestand aus Internetadressen, die vom Crawler heruntergeladen und von der Extraktionseinrichtung durchsucht werden sollen,
eine Einrichtung zur dynamischen Anpassung des Datenbestandes durch:
   Hinzufügen neuer Links, die beim Durchsuchen der heruntergeladenen Seiten von der Extraktionseinrichtung ermittelt wurden; und/oder
   Verwerfen von Internetadressen, bei denen die Extraktionseinrichtung festgestellt hat, dass die vorgegebenen Kriterien für die Extraktion einer geographischen Information nicht erfüllt sind; sowie
eine Einrichtung zum wiederholten herunterladen und Durchsuchen der Internetadressen des Datenbestandes.

Die dynamische Anpassung des Datenbestandes ermöglicht es, neue Inhalte in den zu durchforstenden Webseitenbestand aufzunehmen sowie nicht relevante Seiten aus diesem zu entfernen, falls diese Seiten einem vordefinierten Relevanzkriterium (z. B. nur Seiten gewerblicher Anbieter gelten als relevant) nicht entsprechen.

Gemäss einem Ausfürhungsbeispiel umfasst eine Suchmaschine:
eine Einrichtung zum Ermitteln von anzuzeigenden Zusatzinformationen, die zusätzlich zu den auf eine Suchanfrage hin angezeigten Treffern angezeigt werden, wobei diese Einrichtung aufweist:
   eine Einrichtung zum Ermitteln des Themengebiets, zu dem Zusatzinformationen angezeigt werden sollen.

Das Anzeigen von Zusatzinformationen kann für den Benutzer nützlich sein, wenn diese thematisch mit den Treffern in Zusammenhang steht. Auch für den Suchmschinenbetreiber kann sie - z. B. zur Einblendung von thematisch passender Werbung - nützlich sein.

Gemäss einem Ausfürhungsbeispiel umfasst eine Einrichtung zum Ermitteln des Themengebiets:
eine Einrichtung zum Zählen der Häufigkeit einzelner Worte, die in der oder den Treffern vorkommen, um auf der Grundlage der am häufigsten vorkommenden Worte das Themengebiet zu ermitteln, zu dem Zusatzinformationen angezeigt werden sollen; und/oder
eine Einrichtung zum Nachschlagen in den jeweiligen Treffern zugeordneten Themengebieten, um basierend darauf das oder die Themengebiete zu ermitteln, zu denen Zusatzinformationen angezeigt werden sollen.

Das Zählen der Worte in den Treffern, wobei für jedes unterschiedliche Wort ein separater Zählert geführt wird, ist ein effizientes Verfahren zum Ermitteln des Themengebiets, wenn auf ein Lexikon zugegriffen wird, bei dem die Worte jeweils Themengebieten zugeordnet sind.

Gemäss einem Ausfürhungsbeispiel sind die angezeigten Zusatzinformationen Werbe-Links und die Reihenfolge der Anzeige der Werbe-Links darauf basiert, wir oft bereits auf einen Werbe-Link geclickt wurde. Dies ermglicht dem Suchmaschinenbetreiber ein effizientes Schalten und Abrechnen von Werbung.

### KURZE BESCHREIBUNG DER ZEICHNUNGEN

Fig. 1 zeigt schematisch einen Aufbau einer Suchmaschine gemäss einem ersten Ausführungsbeispiel der Erfindung.
Fig. 2 zeigt ein Flußdiagramm, das den Betrieb einer Suchmaschine gemäss einem Ausführungsbeispiel der Erfindung illustriert.
Fig. 3 zeigt ein Flußdiagramm, das den Betrieb einer Suchmaschine gemäss einem weiteren Ausführungsbeispiel der Erfindung illustriert.

### DETAILLIERTE BESCHREIBUNG

Nachfolgend wird die vorliegende Erfindung anhand mehrerer Ausführungsbeispiele im Detail beschrieben.

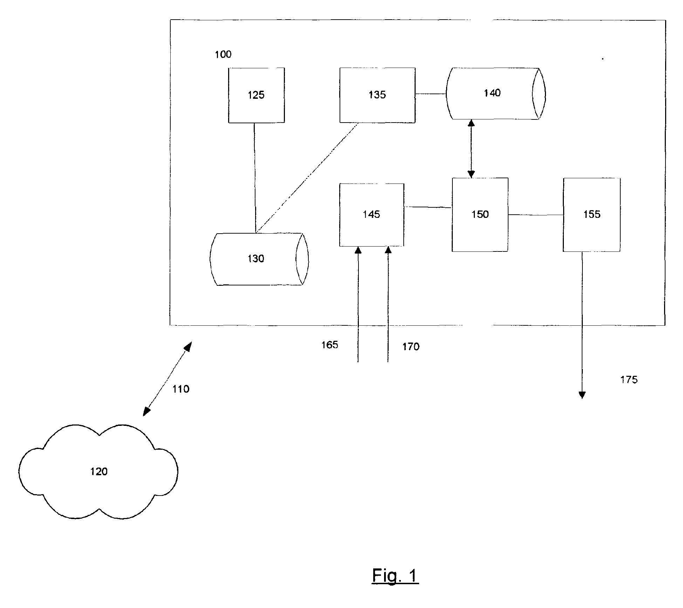

Figur 1 zeigt schematisch eine Konfiguration gemäß einem ersten Ausführungsbeispiel der vorliegenden Erfindung.

Eine Suchmaschine gemäß einem ersten Ausführungsbeispiel ist schematisch in Figur 1 dargestellt. Die Suchmaschine wird implementiert mittels eines Rechners 100. Der Rechner verfügt über eine Verbindung 110 zum Internet 120. Mittels einer Einrichtung zum Durchsuchen des Internet, eines sogenannter Crawlers 125, ist der Rechner 100 in der Lage, verschiedene Seiten des Internet systematisch herunterzuladen und auf ihre Inhalte zu durchsuchen. Der Crawler 125 speichert die Inhalte in einem Speicher 130. Eine Extraktionseinrichtung 135 durchsucht die heruntergeladenen Seiten, um zu ermitteln, ob sie geographische Herkunftsinformationen enthalten, die auf die geographische Herkunft des Seitenanbieters bzw. der durchsuchten Webseite hindeuten. Ist dies der Fall, so werden die entsprechenden geographischen Informationen extrahiert und dann der entsprechenden Seite zugeordnet. Diejenigen Seiten, für die eine solche Zuordnung erfolgreich war, werden dann in einem Datenbestand 140 abgespeichert.

Eine Eingabeschnittstelle 145 ermöglicht es dem Besucher, einen oder mehrere Suchbegriffe 165 sowie separat ein geographisches Herkunftskriterium 170 als Suchbegriffe einzugeben. Bei den Suchbegriffen kann es sich z. B. um thematische Begriffe (z. B. "Schuhe", "Pizza", "Restaurant", etc.) handeln. Das geographische Herkunftskriterium kann t. B. ein Ortsname, ein Stadtteil, ein Strassenname etc, oder - falls von der Eingabeschnittstelle und der Suchmaschine wie später noch beschrieben unterstützt - auch Ortskoordinaten oder ein mittels einer Karte festgelegter Ort oder Umkreis sein. Diese Suchanfrage wird dann von der Sucheinrichtung 150 verarbeitet, indem diejenigen Internetseiten im Datenbestand 140 gesucht werden, für die die Suchbegriffe zutreffen. Die entsprechenden Internetseiten werden dann mittels der Ausgabeschnittstelle 150 ausgegeben und dem Benutzer angezeigt. Dabei verwendet die Einrichtung 150 zum Durchsuchen des Datenbestandes die geographischen Herkunftsinformationen, die neben den ein oder mehreren beliebigen Suchbegriffen als weiteres geographisches Suchkriterium 170 eingegeben wurden, um diejenigen Webseiten aus dem Datenbestand 140 herauszufiltern, für die das geographische Herkunftskriterium zutrifft. Gemäß einem Ausführungsbeispiel kann dies dadurch geschehen, dass die beliebigen Suchbegriffe 165 mittels einer herkömmlichen Suchmaschinentechnologie auf den Datenbestand angewendet werden, um einen ersten Satz entsprechender Treffer aufzufinden, aus diesem ersten Satz von Treffern werden dann unter Überprüfung der den Treffern zugeordneten geographischen Informationen nur diejenigen Webseiten herausgefiltert und zweiter Satz von Treffern 175, die letztlich das Suchergebnis darstellen, ausgegeben, für die das geographische Herkunftskriterium zutrifft.

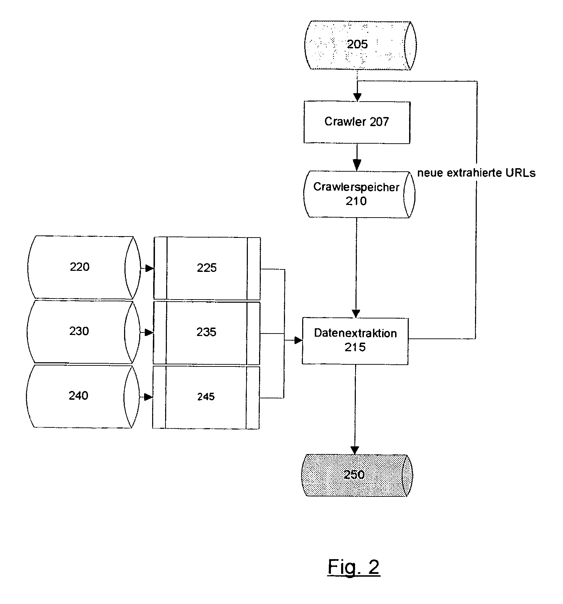

Nachfolgend wird die Erfindung etwas genauer im Detail gemäß einem weiteren Ausführungsbeispiel beschrieben. Figur 2 zeigt dabei ein Flußdiagramm, das den Betrieb einer Suchmaschine gemäß einem Ausführungsbeispiel der Erfindung illustriert.

In einem Schritt 200 durchsucht der "Crawler" mehrere Seiten des Internet. Dies kann beispielsweise dadurch geschehen, dass dem Crawler eine vordefinierte Anzahl von Internetseiten bereitgestellt wird, beispielsweise in Form einer Datenbasis 205, die dann vom Crawler heruntergeladen und in einem Crawlerspeicher 210 abgespeichert wird. Die in dem Crawlerspeicher abgespeicherten Seiten werden dann mittels eines Extraktionsprozesses 215 analysiert und insbesondere geographische Herkunftsinformationen, beispielsweise in Form von Adressen, aus den im Crawlerspeicher abgespeicherten Daten extrahiert und den jeweiligen Seiten zugeordnet. Gemäß dem vorliegenden Ausführungsbeispiel findet dabei zur Extraktion der Daten ein mehrstufiges Verfahren Anwendung.

Durch Abgleichung mit einer Adreßdatenbasis 220 sowie Anwendung eines Regelwerks 225 werden aus den im Crawlerspeicher 210 abgespeicherten Seiteninhalten Adreßdaten extrahiert. Dies kann beispielsweise dadurch geschehen, dass ein vordefinierter Datenbestand, der Adressen enthält (z.B. die Daten eines Telefonbuchs, eines Branchenbuchs, oder eines sonstigen Adreßverzeichnisses) als Adressdatenbasis 220 mit den Daten der Webseite verglichen und im Falle von Übereinstimmungen die entsprechenden Adreßdaten extrahiert werden. Hierzu kann nicht nur nach Eins-zu-Eins-Übereinstimmungen gesucht werden, sondern vielmehr auch ein heuristischer Ansatz unter Verwendung eines Regelwerks verfolgt werden. So kann beispielsweise gemäss dem Regelwerk dann, wenn das Wort "Adresse" im Seiteninhalt gefunden wird und ferner in den nachfolgenden Zeilen eine Ziffer gefunden wird, die in einem Postleitzahlenverzeichnis vorhanden ist, davon ausgegangen werden, dass es sich dabei um eine Adresse handelt. Auf ähnliche Weise kann beispielsweise nach dem Kürzel "Tel." oder "Tel.-Nr." gesucht werden, wobei dann im Falle des Auffinden eines solchen Kürzels davon ausgegangen werden kann, dass die danach kommenden Ziffern eine Telefonnummer beinhalten. Zur weiteren Überprüfung kann dabei gemäss dem Regelwerk noch ein Teil der aufgefundenen Telefonnummer beispielsweise mit einem Vorwahlnummernverzeichnis abgeglichen werden. Es kann eine Bewertung der Adressen in der Art stattfinden, dass man aus mehreren auf der Webseite enthaltenen Adresse diejenige Identifiziert, die den Hauptsitz eines Unternehmens charakterisiert, oder auch deren Filialen oder Aussenstellen bestimmt. Dies geschieht durch die Bewertung des semantischen Umfeldes mit dem Fundort der Adressen sowie einem Vergleich der Häufigkeit des Ortes des Auftretens von bestimmten Adresstypen. Des weiteren können dadurch auch Adressen identifiziert werden, die nicht zur Firma selbst gehören, sondern z.B. Dienstleistern oder Kunden gehören.

Auf ähnliche Weise kann mittels des Regelwerks nach Orts- und Stadtnamen gesucht werden, wobei dann, wenn diesen eine Postleitzahl vorausgeht, was durch Abgleich mit der Datenbasis 220 überprüft werden kann, es sich mit einiger Sicherheit um einen Teil einer Adressinformation handeln dürfte. Die Verwendung einer Datenbank 220 in Verbindung mit einem entsprechenden Regelwerk 225 ermöglicht es dann, aus den im Crawlerspeicher abgespeicherten Webseitendaten Adreßinformationen zu extrahieren.

Dabei kann das Regelwerk auch eine Überprüfung dahingehend enthalten, ob es sich bei der durchsuchten Seite um eine Seite eines "gewerblichen Anbieters" oder um eine nicht gewerbliche Seite handelt. Anhaltspunkte für das Vorliegen einer gewerblichen Seite wären beispielsweise die Angabe einer Bankverbindung, der Hinweis auf die Rechtsform einer Firma (z.B. GmbH, AG, GmbH & Co., etc.). Unter Verwendung derartiger Regelwerke kann dann eine Entscheidung getroffen werden, ob es sich bei der durchsuchten Seite um eine gewerbliche oder um eine nicht gewerbliche Seite handelt. Falls nur gewerbliche Seiten in den Datenbestand aufgenommen werden sollen, so kann das Vorliegen einer nicht gewerblichen Seite zum Verwerfen dieser Seite führen.

Neben der Extraktion von Adressdaten kann das Regelwerk auch so angepasst sein, dass weitere relevante Daten, etwa die Öffnungszeiten, aus einer Webseite extrahiert werden. Auch dies kann geschehen, indem nach vordefinierten Begriffen (etwa "geöffnet" oder "Öffnungszeiten" oder "Geschäftszeiten") gesucht wird und dann die nachfolgenden Terme einer Plausibilitäts- oder Formatprüfung unterzogen werden, um zu ermitteln, ob es sich dabei um Öffnungszeiten handelt. Dies kann durch Abgleich mit vordefinierten Mustern (Templates) geschehen, die repräsentativ für mögliche Öffnungszeitendarstellungen sind. So können etwa Muster für die Wochentage abgelegt sein (Mo Di Mi Do, etc.) Muster für Uhrzeiten (zweistellige Zahl, dann Doppelpunkt oder Punkt, dann erneut zweistellige Zahl). Durch Abgleich mit derartigen Mustern oder "Templates" kann ermittelt werden, ob es sich bei den extrahierten Daten um Öffnungszeiten handelt.

In einem weiteren Schritt werden dann die Seiten des Crawlerspeichers "geokodiert". Mit Geokodierung ist dabei die Zuordnung von geographischen Daten, beispielsweise Daten in Form eines Längen- und eines Breitengrades oder eines anderen vergleichbaren Koordinatensystems (X, Y) zu der Webseite gemeint. Hierzu wird auf die extrahierten Ortsinformationen, die durch die Adreßextraktion ja bereits vorliegen, mittels eines Regelwerks 235 zugegriffen, das sich wiederum einer Datenbasis 230 bedient, in der die geographischen Koordinaten der Orte abgelegt sind. So kann beispielsweise für eine Münchener Adresse in der Maximilianstraße 28 der Geokodierungsprozeß 235 dann auf die Datenbasis 230 zugreifen, in der die entsprechenden Koordinaten X,Y z. B. als Längen- und Breitengradsinformation für diesen Ort abgelegt sind. Diese Koordinaten werden dann der entsprechenden Webseite zugeordnet.

Gemäß einem weiteren Ausführungsbeispiel kann der Extraktionsprozeß ferner die Extraktion von Klassifikationsdaten einschließen. Mit Klassifikationsdaten sind dabei solche Daten gemeint, die eine Webseite aus dem Crawlerspeicher hinsichtlich eines bestimmten semantischen oder sonstigen Inhalts klassifizieren. Eine Möglichkeit einer derartigen Klassifikation wäre beispielsweise eine Business-Klassifizierung, die eine Klassifizierung in unterschiedliche Branchen vornimmt oder auch eine Zuordnung zu Produkten oder Marken vornimmt. Geeignete Klassifikationsbegriffe können beispielsweise Bezeichnungen von Branchen (Mode, Foto, Werbung, Gastronomie, etc) oder sonstige Kategorisierungen (z. B. bei einem Hotel die Anzahl der Sterne) sein.

Um eine derartige Klassifikationsextraktion vorzunehmen, kann eine Datenbasis 240 vorgesehen sein, die in Verbindung mit einem Regelwerk 245 die im Crawlerspeicher abgespeicherten Seiten darauf hin durchsucht, ob diese zu einer bestimmten Business-Kategorie gehören. So kann beispielsweise die Datenbasis den Begriff "Autohaus" enthalten, wenn dieser Begriff dann in einer durchsuchten Seite auftaucht, so kann dieser Seite die Klassifikation "Autohaus" zugeordnet werden.

Um Fehlzuordnungen zu vermeiden, kann dabei das Regelwerk 245 redundant bzw. komplex aufgebaut sein, so dass mehrere Kriterien erfüllt sein müssen, um einer Webseite eine bestimmte Business-Klassifikation zuzuordnen. So können beispielsweise unterschiedliche Teile einer Webseite (z.B. Title, Body, Header, Description, Metatags, etc.) getrennt durchsucht werden, und nur im Falle eines Vorliegens eines Treffers in unterschiedlichen Teilen der Webseite wird positiv entschieden, dass die entsprechende Klassifikation verliehen werden soll. Weiter kann beispielsweise auch ein bestimmter Schwellwert vorgegeben sein, der angibt, wie oft mindestens der gesuchte Begriff auftauchen muß, um eine entsprechende Klassifikation dieser Webseite zuzuordnen. Dieser Schwellwert kann für einzelne Teile der Website separat sowie zusätzlich für die Website insgesamt definiert werden, lediglich bei Überschreiten aller Schwellwertgrenzen wird dann die entsprechende Klassifikation zugeordnet. Ganz allgemein kann gesagt kann man unterschiedliche Teile der Website separat durchsuchen, die jeweiligen Treffer (auch gegebenenfalls hinsichtlich der Anzahl) getrennt gewichten und abschliessend zu einem Gesamt-Score kombinieren, der dann als Entscheidungsgrundlage dient (z. durch Prüfung, ob der Gesamt-Score grösser als ein bestimmter Schwellwert ist), ob die Seite die entsprechende Klassifikation verliehen bekommt.

Gemäß, einem Ausführungsbeispiel können dabei einer Webseite mehrere Business-Klassifikationen zugeordnet werden. Die Datenbasis 240 kann dabei beispielsweise anhand vordefinierter Datenbanken, etwa einem Branchenbuch oder auch einer Datenzusammenstellung eines gewerblichen Anbieters, die verschiedene potentielle Klassifikationsbegriffe enthält, gebildet werden, um eine entsprechend breite Abdeckung mit möglichen Business-Klassifikationen zu erzielen.

Gegebenenfalls kann die Klassifikation auch in hierarchisch unterschiedliche Ebenen unterteilt sein, so dass es sich um eine komplexe Taxonomie handeln kann, deren Einzelelemente jeweils im Falle einer positiven Beurteilung (d.h. für das Regelwerk liegt die entsprechende Klassifikation vor) der entsprechenden Webseite zugeordnet werden.

Als Ergebnis der Anwendung des Extraktionsprozesses 215 auf die im Crawlerspeicher 210 abgespeicherten Webseiten ergibt sich ein Datenbestand 250 aus Webseiten, denen jeweils mehrere Zusatzinformationen zugeordnet sind. Ein Beispiel eines Auszugs des Datenbestands 250 ist dabei in der Tabelle 1 nachfolgend dargestellt.

**Tabelle 1**

| URL | Adresse | Telefon | Geo-Daten | Klassifizierung |
|---|---|---|---|---|
| www.auto-meier.de | Hansestrasse 5 80331 München | 089-2345 | X, Y | Autohaus |

In der Tabelle 1 ist lediglich schematisch ein mögliches Beispiel für einen Datensatz dargestellt, wie er sich aus dem Extraktionsprozeß gemäß vorstehender Beschreibung ergeben könnte. Dabei ist darauf hinzuweisen, dass lediglich beispielhaft die Adresse und die Telefonnummer in separaten Spalten aufgelistet sind, um hier gegebenenfalls auch eine separate Indexierung und Suche zu ermöglichen. Die Telefonnummern könnten aber beispielsweise auch in den Adreßdaten selbst enthalten sein.

Daneben wäre noch anzumerken, dass lediglich eine Business-Klassifikation in Tabelle 1 dargestellt ist, es könnten jedoch beispielsweise auch mehrere Business-Klassifikationen vorgesehen sein, beispielsweise auch Business-Klassifikationen unterschiedlicher Hierarchieebenen wie etwa a) Auto, b) Autovermietung, c) Autohandel, d) Autoreparatur, die dann Felder in unterschiedlichen Spalten der Tabelle 1 zu einer zugehörigen Webseite füllen würden.

Ergebnis des Extraktionsprozesses 215 ist dann der Datenbestand 250 aus Webseiten mit zugeordneten geographischen Herkunftsangaben (z.B. in Form von Adressen), wie beispielhaft in den ersten beiden Spalten von Tabelle 1 dargestellt, gegebenenfalls noch mit ebenfalls zugeordneten Geo-Daten sowie einer oder mehreren Business-Klassifikationen (gemäß einer vorgegebenen Taxonomie).

Der Datenbestand 205, der vom Crawler heruntergeladen und vom Extraxtionsprozess analysiert wird, kann sich dynamisch verändern. Hierzu kann beispielsweise beim Extraktionsprozeß 215 neben der Suche nach geographischen Herkunftsdaten auch eine Suche nach Links in der Webseite durchgeführt werden kann, ein Prozeß, der im Extraktionsmechanismus 215 in Fig. 2 nicht grafisch dargestellt ist. Wird ein derartiger Link, der auf eine weitere Webseite verweist, gefunden, so kann dieser Link dem Bestand 205 an zu durchsuchenden Adressen hinzugefügt werden, so dass sich dieser Bestand dynamisch durch Aufnahme derartiger aufgefundener Links verändert. Auf ähnliche Weise werden Adressen des Bestandes 205, für die keine geographische Herkunft verifiziert werden konnte oder für die sonstige Kriterien, die für die Aufnahme in den Datenbestand erforderlich sind (etwa das Vorliegen einer gewerblichen Seite), nicht erfüllt waren, aus dem zu durchsuchenden Datenbestand 205 entfernt. Diese dynamische Veränderung des Datenbestands 205 ermöglicht es, dass sich der resultierende Datenbestand 250 dynamisch an Veränderungen im Internet anpaßt. Hierzu ist noch anzumerken, dass zu diesem Zweck natürlich der gesamte Prozeß des Durchsuchens und der Extraktion wiederholt durchgeführt werden sollte.

Auf der Grundlage des resultierenden und sich gegebenenfalls dynamisch veränderlichen Datenbestands 250 kann dann eine Suche basierend auf einer Suchanfrage eines Benutzers durchgeführt werden. Dies wird nachfolgend etwas genauer im Detail beschrieben.

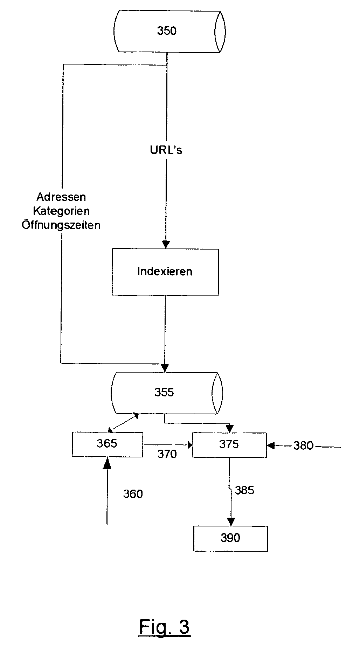

Das Verarbeiten einer Suchanfrage wird nun nachfolgend unter Bezugnahme auf Figur 3 beschrieben. Ausgehend vom Datenbestand 350, der das Ergebnis des Crawlens und des Extraktionsprozesses ist, der unter Bezugnahme auf Fig. 2 beschrieben wurde, wird dieser Datenbestand indexiert. Hierzu werden die auf der Seite vorhandenen Informationen (z.B. Meta Tags, Titel, Überschriften, reiner Text, das Verhältnis von Links zu text), d.h. der Anzahl der Links auf einer URL im Vergleich zu den nicht verlinkten Wörtern, als auch die sie beschreibenden Inormationen (z.B. Bezeichner innerhalb einer URL; Anzahl, Bezeichnung und Quellen der Links, die auf diese Seite verweisen) extrahiert und können in einer oder mehreren separaten Indices gespeichert.. Diese ein oder mehreren separaten Indices bilden dann den in Fig. 3 dargestellten lokalen Index 355. Der Index 355 kann dabei auf herkömmliche Art und Weise auf der Grundlage der Webseiten des Datenbestandes gebildet sein. Das bedeutet, dass z. B. ein Volltextindex über die Seiten des Bestandes 355 gebildet wird, wobei jedem Begriff des so gebildeten Index die entsprechende Website zugeordnet ist. Zusätzlich zu der Website-Adresse ist aber einem Begriff, der im Index enthalten ist, auch noch die geographische Information zugeordnet, die zu dieser Website gehört und im Extraktionsprozess extrahiert wurde. Ein Ausschnitt eines so gebildeten Index kann dabei wie nachfolgend in Tabelle 2 dargestellt aussehen.

| Index-Begriff | URL | Adresse |
|---|---|---|
| Zimmer | www.hotel-maier.de | Karlsplatz 5 80333 München |
| Zimmer | www.hotel-zimmer.de | Sanderstrasse 3 90211 Würzburg |
| Zimmes | www.autohaus-zimmes.de | Rothstrasse 3 80231 München |

### Tabelle 2: Ausschnitt des lokalen Index

Neben einem Volltext-Index, der den gesamten Inhalt der Website indiziert, kann es wie bereits erwähnt im lokalen Index mehrere separate weitere (Teil-)indices geben, die lediglich aus bestimmten Teilen der Website gebildet werden. So kann es separate Indices für Meta Tags, für Titel, für Überschriften, für reinen Text, für das Verhältnis von Links zu text), d.h. die Anzahl der Links auf einer URL im Vergleich zu den nicht verlinkten Wörtern, aber auch für die sie beschreibenden Inormationen (z.B. Bezeichner innerhalb einer URL; Anzahl, Bezeichnung und Quellen der Links, die auf diese Seite verweisen) geben. Jeder dieser (Teil-) Indices repräsentiert dann gewissermassen einen bestimmten Ausschnitt der einzelnen Webseiten. Die verschiedenen (Teil-) Indices können dann einzeln mit der Suchanfage gematcht werden, die einzelnen (Teil-) Anfragen liefern (Teil-) Ergebnisse, und aus diesen Teilergebnissen, die jeweils null, ein oder mehrere Webseiten als Treffer beinhalten, kann dann ein Gesamtergebnis gebildet werden, wie später noch genauer beschrieben wird.

Der lokale Index 355 kann also aus einem oder mehreren (Teil-) Indices bestehen. Nachfolgend wird nun ein Ausführungsbeispiel beschrieben, in dem der lokale Index aus lediglich einem (Teil-) Index besteht, z. B. aus einem Volltextindex.

Wird nun eine Suchanfrage mittels herkömmlicher Suchbegriffe 360 auf den lokalen Index 355 angewendet, so kann dies mittels einer klassischen Suchmaschinentechnologie geschehen, die beispielhaft als Anfrageeinrichtung 365 in Figur 3 dargestellt ist. Die Anwendung der Suchbegriffe 360 auf den Index liefert dann einen ersten Satz von Ergebnissen (Webseiten oder URLs) 370, die dann wiederum mittels einer Nachfiltereinrichtung 375 nachgefiltert werden, und zwar unter Anwendung des weiteren Suchkriteriums der geographischen Herkunftsinformationen 380, die vom Benutzer separat und zusätzlich zu den normalen Suchbegriffen 360 eingegeben wurden. Lediglich diejenigen Webseiten der Ergebnisliste 370, für die die Nachfiltereinrichtung 375 unter Überprüfung der Datenstruktur gemäss Tabelle 2 feststellt, dass das geographische Herkunftskriterium gemäß Suchanfrage-Parameter 380 erfüllt ist, bilden dann die endgültige Ergebnisliste 385, die dem Benutzer ausgegeben wird. So werden beispielsweise bei Eingabe des Suchbegriffs "Zimmer" ohne geographisches Zusatzkriterium die beiden ersten Zeilen der Tabelle 2 als erster Satz Treffer gefunden. Bei Eingabe von "Würzburg" als geographisches Herkunftskriterium wird dann aus den beiden Treffen das "Hotel Zimmer" als endgültiges Ergebnis herausgefiltert, da nur diese Website auch das geographische Herkunftskriterium erfüllt.

Gemäss einem Ausführungsbeispiel kann die Ausgabe mittels einer Ausgabeschnittstelle 390 durchgeführt werden, die dem Benutzer die Ergebnisse in vorzugsweise nach Relevanz geordneter Form anzeigt, beispielsweise in einer Reihenfolge, die Ergebnis eines sogenannten «Ranking-Prozesses» ist. Eine Möglichkeit zur Durchführung eines Ranking-Prozesses ist beispielsweise die Verwendung des sogenannten Page-Rank-Verfahrens, das im US-Patent 6,285,999 beschrieben wird. Wird kein solches Ranking durchgeführt können auch die Ergebnisse 385 auch in ungeordneter Form dem Benutzer präsentiert werden. Des weiteren ist eine Ausgabe aller Ergebnisse rein nach geografischen Kriterien möglich, z.B. alle Firmen (einer bestimmten Kategorie), die in einer Strasse residieren.

Gemäß einem vorteilhaften Ausführungsbeispiel werden die Links zu den als Treffer identifizierten Webseiten zusammen mit der extrahierten Adressinformation, die diesem Link als Ergebnis des Extraktionsprozesses 250 zugeordnet ist, angezeigt. Gegebenenfalls können auch noch weitere Zusatzinformationen, die aus dem Extraktionsprozess resultieren, mittels der Ausgabeschnittstelle 390 angezeigt werden, etwa die Business-Klassifikation und/oder auch die geographischen Daten in Form von Koordinaten.

Nachfolgend wird nun ein Ausführungsbeispiel beschrieben, in dem der lokale Index aus mehreren (Teil-) Indices besteht. Gemäß diesem Ausführungsbeispiel werden also für den Datenbestand 350 mehrere (Teil-) Indizes gebildet, und zwar Indizes über verschiedene Kategorien, wobei die Kategorien beispielsweise die Zusatzinformationen, die aus dem Extraktionsprozess resultieren, sein können, oder aber auch Indices, die aus unterschidlichen Teilen der Websites (wie vorher beschrieben z. B. Metatags, Beschreibung, etc.) gebildet werden. Diese mehreren Indices können dann verwendet werden, um ein Ranking der Treffer durchzuführen, wie nachfolgend noch genauer beschrieben wird. Kategorien, die für das Ranking hinzugezogen werden können, können dabei beispielsweise die unterschiedlichen Abschnitte einer Webseite sein, die etwa der Titel (title), der Körper (body), die Beschreibung der Webseite (description), der Kopf (head), die Link Information etc. So können für die unterschiedlichen Teile der Webseite verschiedene Teil-Indices gebildet werden, diese können dann auf Treffer mit der Suchanfrage gematched werden. Es ergeben sich dann für die verschiedenen Teil-Indices verschiedene Teil-Trefferlisten, die dann miteinander kombiniert werden, z. B. durch Bildung der Schnittmenge aus allen Treffern.

Die Treffer in den unterschiedlichen Teil-Indices können dann auch zur Berechnung eines die Relevanz repräsentierenden "Scores" verwendet werden, z. B. indem für die Treffer in den unterschiedlichen Teil-Indices ein jeweils individueller Score ermittelt wird, der auf der Anzahl der Treffer in einem bestimmten Index basiert (d. heisst wie oft der Suchbegriff in der als Treffer gefundenen Website oder dem Teil von ihr, der für die Indexbildung verwendet wurde, vorkommt), wobei dann gemäss einem vordefinierten Schema diese einzelnen Scores unterschiedlich gewichtet werden und dann die Teil-Scores dieser Webseite, die für sie in den unterschiedlichen Matchings mit den verschiedenen Teil-Indices ermittelt wurden, aufaddiert werden. Damit können entsprechend den jeweiligen Treffern für die unterschiedlichen Indizes verschiedene Gewichtungen für die unterschiedlichen Kategorien (body, title, description, link, etc.) vorgenommen werden, die dann mittels eines Algorithmus zur Kombination der unterschiedlichen Ergebnisse ein Gesamtergebnis für eine jeweilige Seite ergibt, das die Relevanz dieser Seite repräsentiert. So kann z. B. ein Treffer im Titel der Seite stärker gewichtet werden als ein Treffer im Korpus (body), einem Treffer im Teil description kann dagegen eine mittlere Gewichtung zugeschrieben werden. Die detaillierten Faktoren können entsprechend den Umständen angepaßt und variiert werden.

Um in konkretes Beispiel zu geben, kann z. B. der lokale Index aus einem Vollltext-Index und aus einem Index, der nur über den Teil "Title" von Websites gebildet wurde, bestehen. Die Webseite www.mamas-pizza.de habe dann z. B. im Titel das Wort "Mama", und zwar nur einmal, im gesamten Volltext aber 12 Mal.

Der Suchbegriff sei nun "Mama", der auf den Teil-Index "Titel" und auf den Teil-Index "Volltext" gematcht wird. In beiden Fällen ergibt sich (neben vermutlich vielen anderen Websiten) als ein Treffer die Website www.mamas-pizza.de, sie taucht also als Treffer in der Trefferliste des Volltext-Index wich auch des Titel-Index auf. Nun wird für den Treffer www.mamas-pizza.de im Titel-Index ein Score ermittelt, der z. B. darauf beruht wie oft im Titel der Website www.mamas-pizza.de der Suchbegriff (also "Mama") vorkommt. Da dies nur ein Mal der Fall ist, ist der Score von www.mamas-pizza.de für den Teil-Index "Titel" gleich 1. Für den Teilindex "Volltext", bei dem ja auch www.mamas-pizza.de als Treffer auftauchte, wird nun ebenfalls ein Score ermittelt. Da im Volltext der Suchbegriff 12 Mal auftaucht, ist dieser Score nun aber 12. Die beiden Scores werden nun gewichtet, wobei angenommen wird, dass die Gewichtung für "Titel-Scores" 3 sei und die Gewichtung für Volltext-Scores 1. Damit ergibt sich als Gesamt-Score für www.mamas-pizza.de 3 X 1 + 1 X 12 = 15.

Ein entsprechender Score wird nun auch für alle anderen Webseiten ermittelt, die bei dieser Suchanfrage als Treffer gefunden wurden. Auf der Grundlage der so ermittelten Gesamt-Scores können dann die Treffer geordnet nach ihrer durch den Gesamt-Score ermittelten Relevanz ausgegeben werden.

Auf die so beschriebene Weise kann somit der lokale Index 355 aus mehreren Teil-Indices gebildet werden, die dann miteinander kombiniert werden, um gewissermassen einen "lokalen Gesamt-Index" zu bilden.

In einem weiteren Ausführungsbeispiel können separate Indices für eine Inhaltssuche (eine Suche nach dem "Was") und eine Ortssuche (eine Suche nach dem "Wo") gebildet werden. Hierzu werden die georeferenzierten Daten indiziert, und zwar so, dass der Index über die Ortsdaten gebildet wird, dass also über die Eingabe der Ortsdaten (z. B. über die entsprechenden Koordinaten) nach zu diesen Ortsdaten zugehörigen Websites gesucht werden kann. Die Ortsdaten können dabei als Koordinaten oder auch in anderer Form (z. B. als Ortsnamen oder Adressen, als Markierungen in einer Landkarte, etc. ) eingegeben werden. Bei Eingabe in Form von Adressen oder über eine Eingabekarte, z. B. durch Anclicken des Suchortes oder Definieren eines Umkreises für die Umkreissuche wird dann diese Eingabe in entsprechende Koordinaten umgewandelt, die die Basis für die Indizierung bilden und die dann als Suchanfrage auf den Index gematcht werden können.

Es kann dann eine "Wo"-Suchanfrage auf den Ortskoordinaten-Index gematcht werden, die entsprechenden Ergebnisse können dann unter Verwendung des weiteren "Was"-Suchkriteriums nachgefiltert werden, d. h. aus den Treffern, für die die Ortssuchanfrage einen Hit ergab, werden diejenigen herausgefiltert, für die dann auch noch das "Was"-Suchkriterium zutrifft. Hierzu enthält der Index neben dem Primärschlüssel bestehend aus den Ortskoordinaten und den zugeordneten Webadressen auch noch die entsprechenden "Was"-Informationen, also z. B. den Volltext der entsprechenden Website. Anhand dessen kann dann überprüft werden, ob sowohl das "Wo" als auch das "was"-Kriterium zutreffen.

Eine effizientere Vorgehensweise bei Auftreten von sowohl dem "Was"- als auch dem "Wo"-Suchkriterium besteht darin, zunächst die "Was"-Suche über den lokalen Index durchzuführen und dann die gefundenen Treffer unter Überprüfung dahingehend, ob für sie das "Wo"-Suchkriterium zutrifft, nachzufiltern. Dies ist deshalb effizienter als eine Suche zunächst nach dem wo und dann eine Nachfilterung nach dem "Was", weil jede Website nur eine Ortskoordinate zugeordnet hat, die bei der Nachfilterung überprüft werden muss, jedoch jede Website typischerweise sehr viel "Was"-Informationen (Text etcetera) enthält, was eine Nachfilterung nach dem "was"-Suchkriterium gegenüber einer Nachfilterung nach dem "wo" deutlich erschwert.

Des weiteren ist eine Kombination aus mehreren Indices möglich, so dass z.B. georeferenzierte Indices aus z.B. verschiedenen Bundesländern mit nicht georeferenzierten Indices wie einem Standard Suchmaschinenindex gemischt werden können. Damit kann man z.B. Ortsinformationen aus nicht georeferenzierbaren Lexikas mit den Informationen eines georeferenzierten Index zu einer Stadt entsprechend dem Rankwert mischen. Dies bedeutet dann, dass der lokale Index beispielsweise aus Einträgen besteht, die georeferenziert sind sowie aus Einträgen, die nicht georeferenziert sind. Eine Suchanfrage ergibt dann z. B. sowohl georeferenzierte als auch nicht georeferenzierte Treffer, die dann im Ranking zwar unterschiedlich bewertet aber dennoch in einer gemeinsamen Ergebnisliste ausgegeben werden

Der Nutzer kann eine Suchanfrage durch Eingabe eines Suchwortes ("WAS"), alternativ oder zusätzlich auch durch Eingabe eines Suchgebietes ("Wo"; z.B. Ort, Region, Strasse) definieren. Dieses Suchgebiet kann z.B. durch einen Namen aber auch durch einen frei wählbaren Kartenausschnitt erfolgen.

Die Suchlogik liefert dann durch einen Vergleich beider Begriffe mit den Indizierten Informationen entsprechende Ergebnisse für den Nutzer. Wie bereits erwähnt geschieht dies für den Fall, dass sowohl ein "was"- als auch ein "wo"-Kriterium definiert wurden, vorzugsweise indem zunächst ein Matchen auf den lokalen "Was"-Index, der über die Seiten-Inhalte gebildet wurde, erfolgt und anschliessend durch eine Nachfilterung der Treffer hinsichtlich des "Wo"-Suchkriteriums. Es ergibt sich dann eine Anzahl von Treffern, die für den Benutzer ausgegeben wird.

Die Suchbedingungen, die für die Ausgabe eines Treffers erfüllt sein müssen, können z. B. in folgender Weise definiert werden:
- wenn in einem Ort, Strasse Region gesucht wird, werden nur Ergebnisse die dieses Kriterium genug erfüllen, ausgegeben
- es kann im Umkreis um eine Position (Ort, Ortsmitte, Adresse, ..) in einer bestimmten Entfernung (z.B. Radius) gesucht werden.
   Gemäss einem Ausführungsbeispiel wird der Benutzer bei der Suche mittels assistierender Verfahren unterstützt, die ihm helfenschnell zu seinem gewünschten Ergebnis zu kommen. Dies kann z,. B. umfassen
- Hilfestellungen bei Tippfehlern, indem Vorschläge generiert werden, die dem eingegebenen Suchwort oder Suchort in der Schreibweise ähnlich sind,
- Hilfestellungen in der Art, dass ihm während des Eingebens des Ortes bereits die Orte oder Strassen angezeigt werden, die mit den bereits eingegebenen Buchstaben übereinstimmen
- Hilfestellung in der Art, dass ihm thematisch ähnliche Suchen angeboten werden , in dem man z.B. ähnliche Suchbegriffe auf der Basis eines Lexikons mit anzeigt
- Des weiteren können dem Nutzer Hinweise auf Themen gegeben werden, die besonders häufig in den Resultaten auftauchen. Hierzu werden beispielsweise die häufigsten Worte, die in den Trefferseiten vorkommen ermittelt, bedeutungslose "Stop-Worte" (z. der, die, das, ein, etc.) eliminiert, und dann die häufigsten Worte mit einem vordefinierten Katalog aus Themen verglichen, denen jeweils entsprechende Hinweise zugeordnet sind. Gibt es eine Übereinstimmung zwischen z. B. dem häufigsten Wort und einem solchen Eintrag in dem Katalog (z. B. das Wort Hotel), so werden die diesem Eintrag zugeordneten Informationen automatisch mit ausgegeben. Dies kann dann z. B. in der Form "Weitere Informationen zum Thema Hotel finden Sie unter ...." erfolgen. Dieser Mechanismus kann auch zur Einblendung von Werbung verwendet werden. Dabei sind dann z. B. den Einträgen des Katalogs, also etwa Begriffen wie Autohaus, Bäckerei, Buchhandlung, etc. jeweils (typischerweise mehrere) vordefinierte Werbeanzeigen zugeordnet. Zu einem Treffer werden dann die Werbeanzeigen (oder eine bestimmte Anzahl von ihnen, z. B. 3, 5, oder 8) angezeit.
   Dabei können die einem Katalogbegriff zugeordneten Werbeanzeigen, die beispielsweise von Werbekunden des Suchmaschinenbetreibers geschaltet und bezahlt werden, einem Ranking unterzogen werden. Hier gibt es für unterschiedliche Ausgführungsbeispiele verschiedene Möglichgkeiten. So kann beispielsweise das Ranking daraus basieren, wie oft eine Anzeige vom Benutzer angeclickt wird. So kann jeder Anzeige ein Score zugeordnet sein und eine vorbestimmte Anzahl von Treffern, und zwar die mit dem höchsten Score, wird dann dem Benutzer angezeigt. Clickt ein Benutzer dann auf eine der Werbeanzeigen, so wird deren Score erhöht.
   Der Score, der angibt wie oft eine Werbeanzeige angeclickt wurde, kann auch verwendet werden, um die Kosten, die der Werbekunde an den Suchmaschinenbetreiber zahlen muss, zu berechnen. Neben dem Ranking auf der Grundlage der Zahl der Clicks auf eine Anzeige kommen auch andere Faktoren in Frage, die das Ranking beeinflussen können. So kann z. B. ein Kunde der mehr bezahlt, grundsätzlich einen "Bonus-Score" erhalten.

Die angezeigten Ergebnisse können durch die folgenden Eigenschaften gekennzeichnet sein:
- URL, die die Information enthält
- Anzeige der Adresse, die der der URL zugeordnet wurde
- Link zu einer Visitenkartendarstellung der Firmeninformationen
- Link zu einer Kartendarstellung der der URL zugeordneten Ortes
- Die Darstellung kann als Fliesstext oder als Tabelle erfolgen
- Die Darstellung der Resultate kann als reiner Text, mit einer Karte zur Orientierung oder mit einer Karte, die alle Ergebnisse darstellt, erfolgen.

Die vorliegende Erfindung wurde anhand mehrerer Ausführungsbeispiele beschrieben. Der Fachmann versteht, dass die Erfindung realisiert und implementiert werden kann, indem ein Computer mittels einer üblichen Programmiersprache so programmiert wird, dass er die Funktionalitäten der beschriebenen Ausführungsbeispiele auszuführen in der Lage ist. Entsprechend handelt es sich bei der Suchmaschine gemäss Ausführungsbeispielen der Erfindung um einen programmierten Computer oder auch um ein Computerprogramm, das einen Computer in die Lage versetzt, bei seiner Ausführung entsprechend den Funktionalitäten der geschilderten Ausführungsbeispiele zu operieren. Ein Verfahren zur Durchführung einer geschilderten Suchmaschinenfunktionalität kann ebenfalls ein Ausführungsbeispiel der Erfindung bilden.

Gemäß einem weiteren Ausführungsbeispiel kann der Benutzer die geographischen Herkunftsinformationen nicht nur beispielsweise mittels Eingabe eines Ortes, sondern auch mittels Eingabe eines Gebiets, etwa auch durch Auswahl auf einer Karte eingeben. Hierzu wird wiederum auf die geokodierten Daten, die bereits im Datenbestand 230 Bezug genommen, so dass hier mittels einer Abbildung zwischen den geographischen Daten und den entsprechenden Ortsnamen ermittelt werden kann, auf welches geographische Gebiet sich die Suchanfrage bezieht.

Gemäß einem weiteren Ausführungsbeispiel können für die aufgefundenen Treffer neben den Inhalten der Treffer selbst noch weitere Zusatzinformationen angezeigt werden Dazu können beispielsweise auf einer speziell gegliederten Ansicht die assoziierten Firmen Zusatzinformationen wie z.B. Gründungsjahr, Produkte, aber auch E-Mail Adresse, Umsatzsteuer ID oder auch Name der Geschäftsführer angezeigt werden. Diese werden dabei auch über ein spezielles Regelwerk extrahiert, analog zur Vorgehensweise bei der Extraktion der Ortsinformationen.

Nachfolgend wird ein Ausführungsbeispiel beschrieben, in dem ermittelt wird, welche Zusatzinformationen zusätzlich zu einem Treffer noch ngezeigt werden sollen. Für eine als Treffer aufgefundene Seite wird dabei ermittelt, welche Begriffe auf dieser Seite am häufigsten vorkommen. Es wird dann für diese Begriffe überprüft, ob sie mit einem Begriff der Taxonomie, die in der Datenbasis 240 aus Figur 2 abgespeichert ist, übereinstimmt. Ist dies der Fall, so kann davon ausgegangen werden, dass dieser Begriff für die Suchanfrage und somit auch für den Benutzer eine gewisse Relevanz aufweist. Der entsprechende Begriff kann dann auf der Ergebnisseite selbst bzw. separat der Ergebnisseite zugeordnet für den Benutzer eingeblendet werden, und zwar in der Form, dass mittels eines Klicks auf diesen Begriff entweder eine erneute Suchanfrage auf den Datenbestand durchgeführt wird, die als Suchkriterium diesen Taxonomiebegriff enthält, oder indem mittels klickens auf diesen Begriff eine vordefinierte Anzahl von vordefinierten Links dem Benutzer angezeigt wird, die unter diesen Taxonomiebegriff fallen. Dabei kann es sich bei diesen Links auch um Werbeeinblendungen handeln, die vom Suchmaschinenbetreiber als Werbetreibender direkt eingeblendet werden und die auf Firmen verweisen, die für diese Werbeeinblendungen an den Suchmaschinenbetreiber bezahlen. Die Werbelinks sind vordefiniert und unterliegen gemäss einem Ausführungsbeispiel einem Ranking, wobei das Ranking darauf basiertz, wie oft ein Werbelink von einem Benutzer angeclickt wurde. Hierzu wird für jeden Werbelink ein Counter geführt, der die Zahl der Clicks auf diesen Link zählt. Dieser Counter kann dann auch zur Abrechnung der Kosten verwendet werden, die der Suchmaschinenbetreiber dem, der die Antzeige in Auftrag gegeben hat, in Rechnuing stellt.

Alternativ zum Zählen der Worte in einem Hit, um das Thema, das für diesen Hit relevant ist und zu dem Zusatzinformationen angezeigt werden sollen, kann auch einem Eintrag im Index jeweils ein Thema zugeordnet sein, dem wiederum Werbe-Links zugeordnet seind. Diese Werbelinks werden dann angezeigt (alle oder die am höchsten gerankten), wenn der entsprechende Eintrag des Index als Hit auf die Suchanfrage ausgegeben wird.

## Patentansprüche

1. Suchmaschine zum Durchführen einer Suche nach Internetseiten, für die ein vom Benutzer als Suchbegriff eingegebenes geographisches Herkunftskriterium erfüllt ist, wobei die Suchmaschine aufweist:
eine Einrichtung zum Durchsuchen einer Mehrzahl von Internetseiten;
eine Einrichtung (135) zum Extrahieren von Adressdaten aus den durchsuchten Seiten (130, 205), wobei die extrahierten Adressdaten jeweils eine geographische Zuordnung der Seite bzw, des Seitenanbieters bezeichnen;
eine Einrichtung (140) zum Bilden eines Datenbestandes (250), in dem eine Vielzahl von durchsuchten Internetseiten abgespeichert ist, für die jeweils aus diesen Internetseiten Adressdaten extrahiert und zugeordnet sind;
eine Eingabeschnittstelle (145) zur Eingabe einer Suchanfrage durch den Benutzer, wobei die Eingabeschnittstelle dem Benutzer die Eingabe eines geographischen Herkunftskriteriums zusätzlich zu weiteren Suchbegriffen ermöglicht; und
eine Einrichtung (150) zum Durchsuchen des Datenbestands und zur Ausgabe derjenigen Internetseiten, für die das geographische Herkunftskriterium und die weiteren Suchbegrlffe erfüillt sind, durch Abgleich mit den Inhalten und den extrahierten Adressdaten der Internetseiten;
**dadurch gekennzeichnet, dass** die Einrichtung zum Extrahieren von Adressdaten aufweist:
eine Einrichtung zum Anwenden eines Regelwerks auf den Inhalt einer Internetseite, um diejenigen Informationen zu extrahieren, die entsprechend den Kriterien des Regelwerks Adressdaten spezifizieren könnten;
eine Einrichtung zur Verifizierung der entsprechend den Kriterien des Regelwerks spezifizierten Adressdaten durch Abgleich mit einem vorhandenen Datenbestand (220) aus existierenden Adressen, wobei die entsprechend den Kriterien des Regelwerks spezifizierten Adressendaten, für die der Abgleich mit dem vorhandenen Datenbestand aus existierenden Adressen keine Übereinstimmung liefert, aus dem zu durchsuchenden Datenbestand (205) entfernt werden.

2. Suchmaschine nach Anspruch 1, welche ferner aufweist:
eine Einrichtung zur Beurteilung, ob es sich bei der durchsuchten Seite um die Seite eines gewerblichen Anbieters handelt.

3. Suchmaschine nach Anspruch 1 oder 2, welche ferner aufweist:
eine Einrichtung zur Geokodierung der durchsuchten Internetseite, indem basierend auf den extrahierten Adressdaten durch Abgleich mit einem Datenbestand aus existierenden Geoinformationsdaten zu einer extrahierten Adressinformation eine Geokodierung mittels eines geographischen Koordinatensystems ermittelt und der Internetseite zugewiesen wird.

4. Suchmaschine nach einem der Ansprüche 1 bis 3, welche ferner aufweist:
eine Einrichtung zum Durchsuchen der einzelnen lnternetseiten nach einer Mehrzahl von Begriffen, die geeignet sind, die Internetseiten hinsichtlich des angebotenen Inhalts zu klassifizieren, wobei im Falle eines Treffers - gegebenenfalls unter Anwendung weiterer Bedingungen - der Internetseite eine entsprechende Klassifikation zugewiesen wird.

5. Suchmaschine nach einem der Ansprüche 1 bis 4, welche ferner aufweist:
eine Einrichtung zum separaten Durchsuchen verschiedener Teile der einzelnen Internetseiten nach der Mehrzahl von Begriffen, zum Ermitteln und Gewichten der Treffer in den unterschiedlichen Teilen und zum Ermitteln eines Gesamt-Scores auf der Grundlage der gewichteten Treffer, wobei auf der Grundlage des Gesamt-Scores entschieden wird, ob der jeweiligen Internetseite eine entsprechende Klassifikation verliehen wird.

6. Suchmaschine nach einem der Ansprüche 1 bis 5, welche ferner aufweist:
eine Einrichtung zum Indexieren der durchsuchten Seiten, denen Adressdaten und gegebenenfalls weitere Klassifikationsinformationen zugewiesen wurden;
eine Einrichtung zum Matchen der Suchbegriffe mit dem Inhalt des gebildeten Index;
eine Ausgabe der erhaltenen Treffer, wobei die einer Internetseite zugewiesenen Adressdaten durch Abgleich mit den als Suchbegriff eingegebenen geographischen Herkunftskriterium als Filterkriterium für die Ausgabe der Trefferliste dienen.

7. Suchmaschine nach einem der Ansprüche 1 bis 6, welche ferner aufweist:
eine Einrichtung zum Bilden mehrere Teil-Indices für unterschiedliche Teile von Webseiten;
eine Einrichtung zum Matchen der Suchbegriffe mit dem Inhalt der jeweiligen Teil-Indices zum Finden von Tell-Trefferlisten auf Grundlage der Teil-Indices;
eine Einrichtung zum Bilden einer Gesamt-Trefferliste durch Kombinieren der Teil-Trefferlisten.

8. Suchmaschine nach Anspruch 7, welche ferner aufweist:
jeweils spezifisches Gewichten von Treffern der unterschiedlichen Teil-Trefferlisten; und
Kombinieren der Teil-Trefferlisten mit den unterschiedlichen Gewichtungen zum Bilden einer Gesamt-Trefferliste auf der Basis der kombinierten gewichteten Teil-Trefferlisten.

9. Suchmaschine nach Anspruch 6, 7 oder 8, welche ferner umfasst:
Zuweisen eines Scores zu einem einzelnen Treffer einer Teil-Trefferliste auf der Grundlage eines Bewertungskriteriums zu Bewertung der Relevanz des Treffers;
Zuweisen einer für die Teil-Trefferliste spezifischen Gewichtung zu einem einzelnen Treffer einer Teil-Trefferliste;
Ermittlung eines Gesamt-Scores für den Treffer der Teil-Trefferliste durch Addieren der gewichteten Scores, die diesem Treffer in den verschiedenen Teil-Trefferlisten zugewiesen wurden.

10. Suchmaschine nach einem der Ansprüche 1 bis 9, welche ferner aufweist:
eine Einrichtung zum Normalisieren der extrahierten geographischen Informationen, um diese in ein standardisiertes Format zu bringen, das dann als "Businesscard" die Adressinformationen und gegebenenfalls weiteren Kontaktinformationen zusammen mit der Internetadresse an den Benutzer ausgibt.

11. Suchmaschine nach einem der Ansprüche 1 bis 10, welche ferner aufweist:
einen Datenbestand aus Intemetadressen, die vom Crawler heruntergeladen und von der Extraktionseinrichtung durchsucht werden sollen,
eine Einrichtung zur dynamischen Anpassung des Datenbestandes durch:
Hinzufügen neuer Links, die beim Durchsuchen der heruntergeladenen Seiten von der Extraktionseinrichtung ermittelt wurden; und/oder
Verwerfen von Internetadressen, bei denen die Extraktionseinrichtung festgestellt hat, dass die vorgegebenen Kriterien für die Extraktion einer geographischen Information nicht erfüllt sind; sowie
eine Einrichtung zum wiederholten herunterladen und Durchsuchen der Internetadressen des Datenbestandes.

12. Suchmaschine nach einem der Ansprüche 1 bis 11, welche ferner aufweist:
eine Einrichtung zum Ermitteln von anzuzeigenden Zusatzinformationen, die zusätzlich zu den auf eine Suchanfrage hin angezeigten Treffern angezeigt werden, wobei diese Einrichtung aufweist:
eine Einrichtung zum Ermitteln des Themengebiets, zu dem Zusatzinformationen angezeigt werden sollen.

13. Suchmaschine nach Anspruch 12, wobei Einrichtung zum Ermitteln des Themengebiets aufweist:
eine Einrichtung zum Zählen der Häufigkeit einzelner Worte, die in der oder den Treffern vorkommen, um auf der Grundlage der am häufigsten vorkommenden Worte das Themengebiet zu ermitteln, zu dem Zusatzinformationen angezeigt werden sollen; und/oder
eine Einrichtung zum Nachschlagen in den jeweiligen Treffern zugeordneten Themengebieten, um basierend darauf das oder die Themengebiete zu ermitteln, zu denen Zusatzinformationen angezeigt werden sollen.

14. Suchmaschine nach Anspruch 12 oder 13, wobei die angezeigten Zusatzinformationen Werbe-Links sind und die Reihenfolge der Anzeige der Werbe-Links darauf basiert, wir oft bereits auf einen Werbe-Link geclicki wurde.

## Claims

1. Search engine for performing a search for Internet pages for which a geographical origin criterion which the user has input as a search term is satisfied, wherein the search engine has:
a device for searching a plurality of Internet pages;
a device (135) for extracting address data from the searched pages (130, 250), wherein the extracted address data respectively denote a geographical association for the page or the page provider;
a device (140) for forming a stock of data (250) which stores a multiplicity of searched Internet pages for each of which address data have been extracted and associated from said Internet pages;
an input interface (145) for the input of a search query by the user, wherein the input interface allows the user to input a geographical origin criterion in addition to further search terms; and
a device (150) for searching the stock of data and for outputting those Internet pages for which the geographical origin criterion and the further search terms are satisfied by means of alignment with the contents and the extracted address data from the Internet pages;
**characterized in that** the device for extracting address data has:
a device for applying a set of rules to the content of an Internet page in order to extract that information which, according to the criteria of the set of rules, could specify address data;
a device for verifying the address data specified according to the criteria of the set of rules by means of alignment with an available stock of data (220) comprising existing addresses, wherein those address data specified according to the criteria of the set of rules for which the alignment with the available stock of data comprising existing addresses does not provide a match are removed from the stock of data (205) that is to be searched.

2. Search engine according to Claim 1, further comprising:
a device for assessing whether the searched page is the page of a commercial provider.

3. Search engine according to Claim 1 or 2, further comprising:
a device for geocoding the searched Internet page, wherein, based on the extracted address data via alignment with a stock of data comprising existing geoinformation data, a geocoding for an extracted address information item using a geographical coordinate system is ascertained and assigned to the Internet page.

4. Search engine according to one of Claims 1 to 3, further comprising:
a device for searching the individual Internet pages for a plurality of terms which are suitable for classifying the Internet pages in respect of the content provided, wherein in the event of a hit - possibly by applying further conditions - the Internet page is assigned an appropriate classification.

5. Search engine according to one of Claims 1 to 4, further comprising:
a device for separately searching different portions of the individual Internet pages for the plurality of terms, for ascertaining and weighting the hits in the various portions and for ascertaining an overall score on the basis of the weighted hits, wherein the overall score is taken as a basis for deciding whether the respective Internet page is awarded an appropriate classification.

6. Search engine according to one of Claims 1 to 5, further comprising:
a device for indexing the searched pages, to which address data and possibly further classification information have been assigned;
a device for matching the search terms to the content of the index formed;
an output for the hits obtained, wherein the address data assigned to an Internet page are used as a filter criterion for the output of the hits list by virtue of said address data being aligned with the geographical origin criterion that was input as a search term.

7. Search engine according to one of Claims 1 to 6, further comprising:
a device for forming a plurality of subindices for various portions of web pages;
a device for matching the search terms to the content of the respective subindices in order to find hits list elements on the basis of the subindices;
a device for forming an overall hits list by combining the hits list elements.

8. Search engine according to Claim 7, further comprising:
respectively specific weighting of hits from the various hits list elements; and
combination of the hits list elements with the various weightings in order to form an overall hits list on the basis of the combined weighted hits list elements.

9. Search engine according to Claim 6, 7 or 8, further comprising:
assignment of a score to an individual hit from a hits list element on the basis of an assessment criterion for assessing the relevance of the hit;
assignment of a weighting, that is specific to the hits list element, to an individual hit from a hits list element;
ascertainment of an overall score for the hit from the hits list element by adding the weighted scores which have been assigned to said hit in the different hits list elements.

10. Search engine according to one of Claims 1 to 9, further comprising:
a device for normalizing the extracted geographical information in order to put it into a standardized format which then outputs the address information and possibly further contact information together with the Internet address to the user as a "business card".

11. Search engine according to one of Claims 1 to 10, further comprising:
a stock of data comprising Internet addresses which are intended to be downloaded by the crawler and searched by the extraction device,
a device for dynamically adapting the stock of data by: adding new links which have been ascertained by the extraction device when searching the downloaded pages; and/or
rejecting Internet addresses for which the extraction device has determined that the prescribed criteria for the extraction of a geographical information item are not satisfied; and
a device for repeatedly downloading and searching the Internet addresses from the stock of data.

12. Search engine according to one of Claims 1 to 11, further comprising:
a device for ascertaining supplementary information that is to be displayed which is displayed in addition to the hits displayed for a search query, wherein said device comprises:
a device for ascertaining the subject area for which supplementary information is intended to be displayed.

13. Search engine according to Claim 12, wherein the device for ascertaining the subject area further comprises:
a device for counting the frequency of individual words which occur in the hit or hits in order to take the most frequently occurring words as a basis for ascertaining the subject area for which supplementary information is intended to be displayed; and/or
a device for looking up associated subject areas in the respective hits in order to take this as a basis for ascertaining the subject area or areas for which supplementary information is intended to be displayed.

14. Search engine according to Claim 12 or 13, wherein the displayed supplementary information is advertising links, and the order of display of the advertising links is based on how often an advertising link has already been clicked on.

## Revendications

1. Moteur de recherche destiné à effectuer une recherche de sites Internet pour lesquels un critère d'origine géographique saisi par l'utilisateur en tant que terme de recherche est satisfait, dans lequel le moteur de recherche comprend :
un moyen de recherche d'une pluralité de sites Internet ;
un moyen (135) destiné à extraire des données d'adresses des sites recherchés (130, 205), dans lequel les données d'adresses extraites décrivent une affectation géographique respective du site ou du fournisseur de site ;
un moyen (140) destiné à former une base de données (250) dans laquelle sont stockées une pluralité de sites Internet recherchés pour laquelle des données d'adresses sont respectivement extraites desdits sites Internet et leur sont affectées ;
une interface d'entrée (145) pour la saisie d'une requête par l'utilisateur, l'interface de saisie permettant à l'utilisateur de saisir un critère d'origine géographique en plus d'autres termes de recherche ; et
un moyen (150) destiné à effectuer une recherche dans la base de données et à fournir les sites Internet pour lesquels le critère d'origine géographique et les termes de recherche supplémentaires sont satisfaits, par comparaison aux contenus et aux données d'adresses extraites des sites Internet ;
**caractérisé en ce que** le moyen d'extraction de données d'adresse comprend :
un moyen destiné à appliquer un jeu de règles au contenu d'un site internet afin d'extraire les informations qui pourraient spécifier les données d'adresses conformément aux critères du jeu de règles ;
un moyen destiné à vérifier les données d'adresses spécifiées conformément aux critères du jeu de règles par comparaison à une base de données présente (220) constituée d'adresses existantes, dans lequel les données d'adresses spécifiées conformément aux critères du jeu de règles et pour lesquelles la comparaison à la base de données présente constituée d'adresses existantes ne conduit à aucune concordance sont éliminées de la base de données (205) dans laquelle la recherche doit être effectuée.

2. Moteur de recherche selon la revendication 1, comprenant en outre :
un moyen destiné à juger si le site recherché est le site d'un fournisseur commercial.

3. Moteur de recherche selon la revendication 1 ou 2, comprenant en outre :
un moyen destiné à géocoder le site Internet recherché, dans lequel, sur la base des données d'adresses extraites par comparaison à une base de données constituée d'informations géographiques existantes afin d'obtenir une information d'adresse extraite, un géocodage est déterminé au moyen d'un système de données géographiques et est affecté au site internet.

4. Moteur de recherche selon l'une quelconque des revendications 1 à 3, comprenant en outre :
un moyen destiné à rechercher les sites internet individuels selon une pluralité de termes qui sont appropriés pour la classification des sites internet en ce qui concerne le contenu proposé, dans lequel, lorsqu'un résultat est trouvé, le cas échéant par application de conditions supplémentaires, le site Internet est classé de manière correspondante.

5. Moteur de recherche selon l'une quelconque des revendications 1 à 4, comprenant en outre :
un moyen destiné à effectuer une recherche séparée de différentes parties des sites internet individuels selon la pluralité de termes afin de déterminer et de pondérer les résultats trouvés dans les différentes parties et de déterminer une note globale sur la base des résultats trouvés pondérés, dans lequel, sur la base de la note globale, il est décidé si le site Internet respectif est classé de manière correspondante.

6. Moteur de recherche selon l'une quelconque des revendications 1 à 5, comprenant en outre :
un moyen destiné à indexer les sites recherchés dont les données d'adresses et le cas échéant, d'autres informations de classification ont été affectées ;
un moyen destiné à mettre en correspondance les termes de recherche avec le contenu de l'index construit ;
la fourniture des résultats obtenus, les données d'adresses affectées à un site Internet étant utilisées comme critère de filtrage pour la fourniture de la liste de résultats trouvés par comparaison avec le critère d'origine géographique fourni en entrée en tant que terme de recherche.

7. Moteur de recherche selon l'une quelconque des revendications 1 à 6, comprenant en outre :
un moyen destiné à construire une pluralité d'indices partiels pour les différentes parties de sites Web ;
un moyen destiné à mettre en correspondance le terme de recherche avec le contenu des indices partiels respectifs afin de trouver des listes de résultats trouvés partiels sur la base des indices partiels ;
un moyen destiné à construire une liste globale de résultats trouvés par combinaison des listes de résultats trouvés partiels.

8. Moteur de recherche selon la revendication 7, comprenant en outre :
des poids spécifiques respectifs de résultats trouvés des différentes listes de résultats trouvés partiels ; et
la combinaison des listes de résultats trouvés partiels avec les différentes pondérations pour construire une liste globale de résultats trouvés sur la base des listes de résultats trouvés partiels pondérés et combinés.

9. Moteur de recherche selon la revendication 6, 7 ou 8, comprenant en outre :
l'affectation d'une note à un résultat trouvé individuel d'une liste de résultats trouvés partiels sur la base d'un critère de pondération afin d'évaluer la pertinence du résultat trouvé ;
l'affectation d'une pondération spécifique de la liste de résultats trouvés partiels à un résultat trouvé individuel d'une liste de résultats trouvés partiels ;
la détermination d'une note globale pour les résultats trouvés de la liste de résultats trouvés partiels par addition des notes pondérées qui ont été affectées à ce résultat trouvé dans les différentes listes de résultats trouvés partiels.

10. Moteur de recherche selon l'une quelconque des revendications 1 à 9, comprenant en outre :
un moyen destiné à normaliser les informations géographiques extraites afin de mettre celles-ci sous un format normalisé qui fournit ensuite à l'utilisateur les informations d'adresses et le cas échéant, des informations de contact supplémentaires en association avec l'adresse internet sous la forme d'une "carte de visite".

11. Moteur de recherche selon l'une quelconque des revendications 1 à 10, comprenant en outre :
une base de données constituée d'adresses Internet qui doivent être téléchargées par le robot et doivent être recherchées par le moyen d'extraction,
un moyen destiné à adapter de manière dynamique la base de données par :
ajout de nouveaux liens ayant été obtenus lors de la recherche des sites Internet effectuée par le moyen d'extraction ; et/ou
rejet d'adresses Internet pour lesquelles le moyen d'extraction a déterminé que les critères prédéterminés destinés à l'extraction d'une information géographique ne sont pas remplis ; et
un moyen destiné à répéter le téléchargement et la recherche des adresses Internet dans la base de données.

12. Moteur de recherche selon l'une quelconque des revendications 1 à 11, comprenant en outre :
un moyen destiné à déterminer des informations supplémentaires à afficher qui sont affichées en plus des résultats trouvés pour une requête de recherche, dans lequel ledit moyen comprend :
un moyen destiné à déterminer le domaine thématique pour lequel des informations supplémentaires doivent être affichées.

13. Moteur de recherche selon la revendication 12, dans lequel le moyen destiné à déterminer le domaine thématique comprend :
un moyen destiné à compter la fréquence de mots individuels qui apparaissent dans le ou les résultats trouvés afin de déterminer le domaine thématique sur la base des mots apparaissant le plus souvent et pour lequel des informations supplémentaires doivent être affichées ; et/ou
un moyen destiné à effectuer une recherche dans des domaines thématiques associés aux résultats trouvés respectifs afin de déterminer sur la base de ceux-ci le ou les domaines thématiques pour lesquels des informations supplémentaires doivent être affichées.

14. Moteur de recherche selon la revendication 12 ou 13, dans lequel les informations supplémentaires affichées sont des liens publicitaires et l'ordre d'affichage des liens publicitaires est basé sur la fréquence avec laquelle des clics ont déjà été effectués sur un lien publicitaire.
